Europäisches Patentamt

European Patent Office

Office européen des brevets

(19)

(11) Numéro de publication: **0 054 492**
**A1**

## (12) DEMANDE DE BREVET EUROPEEN

(21) Numéro de dépôt: **81401991.5**

(22) Date de dépôt: **11.12.81**

(51) Int. Cl.³: **G 02 F 1/13**
**G 09 F 9/30**

(30) Priorité: **11.12.80 FR 8026354**

(43) Date de publication de la demande:
**23.06.82 Bulletin 82/25**

(84) Etats contractants désignés:
**AT BE CH DE GB IT LI LU NL SE**

(71) Demandeur: **ELECTRONIQUE MARCEL DASSAULT**
**Société dite:**
**80, avenue Marceau**
**F-75008 PARIS(FR)**

(72) Inventeur: **Pelletier, Daniel**
**2 bis, rue Berthe**
**F-75018 Paris(FR)**

(72) Inventeur: **Faber, Gérard**
**6, rue du Muguet**
**F-95210 Saint-Gratien(FR)**

(74) Mandataire: **Monod, Jean-Yves et al,**
**Cabinet Netter 40, rue Vignon**
**F-75009 Paris(FR)**

(54) **Dispositif de visualisation d'informations sur une image.**

(57) Un dispositif de visualisation d'une information sur une réprésentation graphique comprend un projecteur (30) permettant de présenter sur un écran (14) une image d'une figure, par exemple un schéma, enregistrée sur un film support (44). Une matrice d'affichage à cristaux liquides (24) est interposée entre le projecteur et l'écran (14) et de préférence accolée à ce dernier. Des signaux de commande de la matrice permettent de faire apparaître une marque (92) dans la matrice dont l'ombre portée (94) sur l'écran (14) apparaît en superposition à la figure projetée. La position de cette marque par rapport à ladite figure et/ou sa forme ou son aspect correspondent à une information que l'on désire visualiser. Cette information peut être variable dans le temps sous la commande des signaux d'affichage. Des images de plusieurs schémas peuvent être enregistrées sur le film (44).

FIG. 1

1

Titre de l'invention :

DISPOSITIF DE VISUALISATION D'INFORMATIONS SUR UNE IMAGE.

Domaine technique :

L'invention a pour objet un dispositif de présentation d'informations sur une image, par exemple pour afficher sur l'image des indications susceptibles de subir des modifications en relation avec l'objet représenté par cette image.

Elle vise notamment la visualisation d'informations par affichage en relation avec une image d'une ou plusieurs marques dont la position et/ou la signification par rapport à l'image représentent l'information à visualiser.

Technique antérieure :

On fait fréquemment appel à des modes de présentation d'informations dans lesquels, pour faciliter la saisie d'indications susceptibles de changement, on affiche des marques matérielles ou lumineuses propres à être déplacées sur une représentation graphique de base, ou image, plus ou moins complexe telle qu'un schéma, un plan, une photographie, etc.

Exposé de l'invention :

L'invention permet de réaliser de telles présentations lorsque les indications à afficher sont transmises par des signaux électriques, notamment quand la représentation graphique relativement complexe qui est ainsi marquée doit pouvoir être aisément sélectionnée parmi un ensemble. L'invention permet également de figurer des indications transmises par signaux par des marques affichables susceptibles d'occuper un grand nombre de positions différentes par rapport à la représentation graphique de base, et éventuellement à prendre des formes différentes en grand nombre.

L'invention vise un dispositif de visualisation d'indications transmises par signaux sur une représentation graphique qui permet d'atteindre ces buts tout en étant compacte et de constitution simple.

A cet effet, elle prévoit un tel dispositif de visualisation caractérisé en ce qu'il comprend des moyens de présentation d'une figure enregistrée sur un support graphique et une plaque à cristaux liquides, propre à faire apparaître au moins une marque dont la position sur cette plaque est fonction de signaux électriques de commande qui lui sont appliqués, cette plaque étant juxtaposée aux moyens de présentation de façon à réaliser pour un observateur la superposition de cette marque et de la figure présentée.

La plaque de cristaux liquides absorbe sélectivement, en fonction de signaux électriques reçus, une partie de la lumière en provenance de la figure présentée et visible par l'observateur. Ce procédé permet d'obtenir une ou des marques superposées à la figure avec une excellente définition.

Les moyens de présentation de la figure comprennent en général une source lumineuse spécifique qui permet d'éclairer la figure présentée. La plaque à cristaux liquides est alors de préférence placée entre la source et l'image présentée et fonctionne par transparence et non transparence en interceptant plus ou moins,de façon sélective, les rayons lumineux éclairant la figure présentée.

Cette présentation peut avantageusement s'effectuer sur un écran diffusant sur lequel apparaît alors l'ombre portée de la ou des marques engendrées dans la plaque de cristaux liquides. La ou les marques sont alors visibles par un observateur de l'écran même sous un angle relativement grand par rapport à la normale à l'écran, ce qui n'est pas toujours possible quand on observe directement la plaque à cristaux liquides elle-même.

Avantageusement, on prévoit de réaliser l'écran par une surface translucide accolée à la face de sortie des rayons lumineux de la plaque à cristaux liquides.

Selon un mode de réalisation, les moyens de présentation comportent des moyens de projection d'une image sur un support, tel qu'un film, pour former la figure à observer sur un écran. La face de l'écran accessible à l'observation est alors de préférence la face opposée au support d'image, la plaque à cristaux liquides fonctionnant par transmission en modulant la lumière qui la traverse pour former l'image sur l'écran.

Le dispositif se prête facilement à l'interchangeabilité des figures sur l'écran en prévoyant par exemple un magasin propre à abriter une collection de supports d'images différentes et des moyens pour sélectionner à volonté l'image à présenter sur l'écran parmi cette collection.

Le dispositif selon l'invention permet de combiner des informations relativement simples mais susceptibles de modification dans le temps et transmissibles par signaux électriques, avec des images relativement complexes et dont la transmission par signaux serait difficile, sinon impossible, telles que des représentations graphiques, des plans, schémas, photographies, etc., destinés à coopérer avec les informations graphiques transmises par signaux.

Pour chaque application du dispositif, il est ainsi possible de stocker dans un volume limité, et à faible coût, une collection de supports graphiques qu'on peut sélectionner à volonté pour y superposer des indications relatives à l'image. Ces indications représentent une information dynamique qui peut être transmise par exemple par des signaux électriques à partir d'un poste de commande pour être constamment à la disposition d'un ou plusieurs utilisateurs équipés de dispositifs selon l'invention.

Dans certains cas, on prévoit d'effectuer parmi les signaux de commande d'affichage transmis électriquement une sélection en fonction de l'image sélectionnée.

Brève description des dessins :

0054492

La description qui suit est donnée à titre d'exemple non limitatif en référence aux dessins annexés dans lesquels:

- la figure 1 est une vue schématique d'un dispositif selon l'invention;

- la figure 2 représente un schéma synoptique de circuits utilisés pour la commande du dispositif de la figure 1;

- la figure 3 illustre un autre mode de réalisation du dispositif selon l'invention.

Description de modes de réalisation :

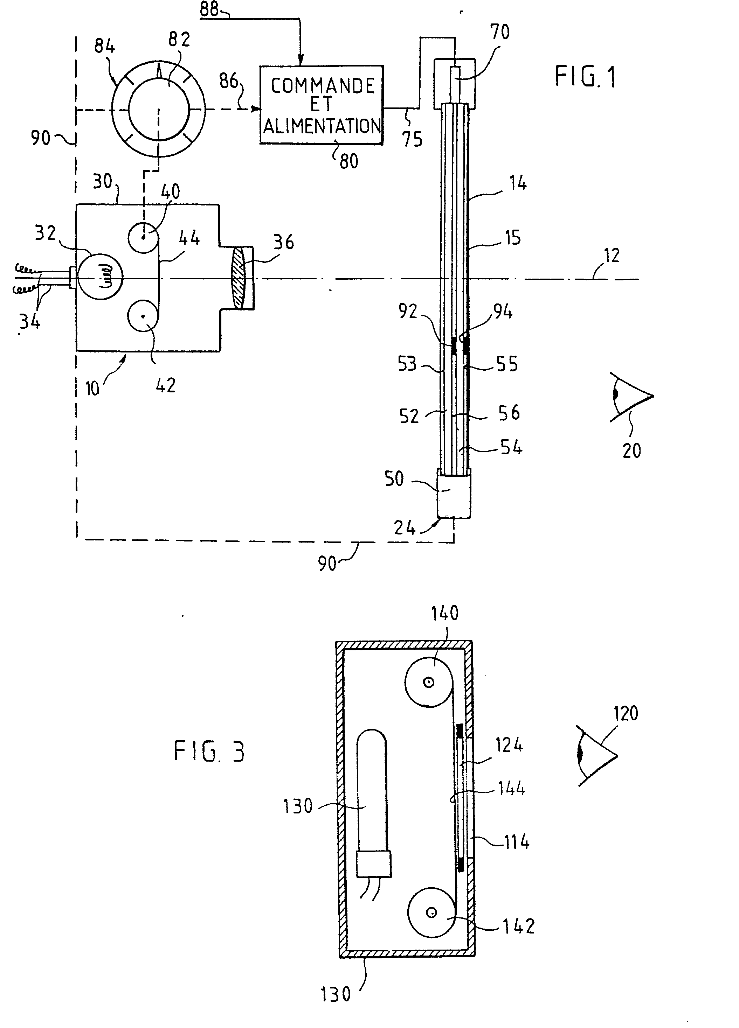

Un dispositif de visualisation (figure 1) comprend d'une façon générale, un dispositif de projection 10 d'axe optique 12, un écran de vision 14 dont la face 15 opposée au dispositif de projection 10 est accessible à un observateur schématisé en 20. Entre l'écran 14 et le dispositif 10 est interposée une plaque d'affichage à cristaux liquides 24.

Le dispositif de projection 10 comprend un boîtier 30 à la partie postérieure duquel est logée une lampe 32 alimentée par des conducteurs 34. A la partie avant du boîtier 30 est monté un objectif de projection 36 centré sur l'axe optique 12. Entre l'objectif 36 et la lampe 32 est monté à l'intérieur du boîtier 30 un dérouleur de film comprenant deux bobines 40 et 42 de part et d'autre de l'axe 12 propres à assurer le défilement d'un film 44 perpendiculairement à l'axe 12, de façon que toute image enregistrée sur ce film positionnée devant la lampe 32 soit projetée sur l'écran 14 perpendiculaire à l'axe 12 pour y former une figure nette.

Le dispositif d'affichage à cristaux liquides 24 comprend, montées à l'intérieur d'une monture carrée 50, deux plaques de verre parallèles, représentées grossièrement en 52 et 54, et perpendiculaires à l'axe 12 entre lesquelles subsiste un mince espace 56 rempli d'un film de liquide à structure nématique. Sur les faces non en regard des lames de verre 52 et 54 sont disposées deux lames de polariseur respectives 53 et 55.

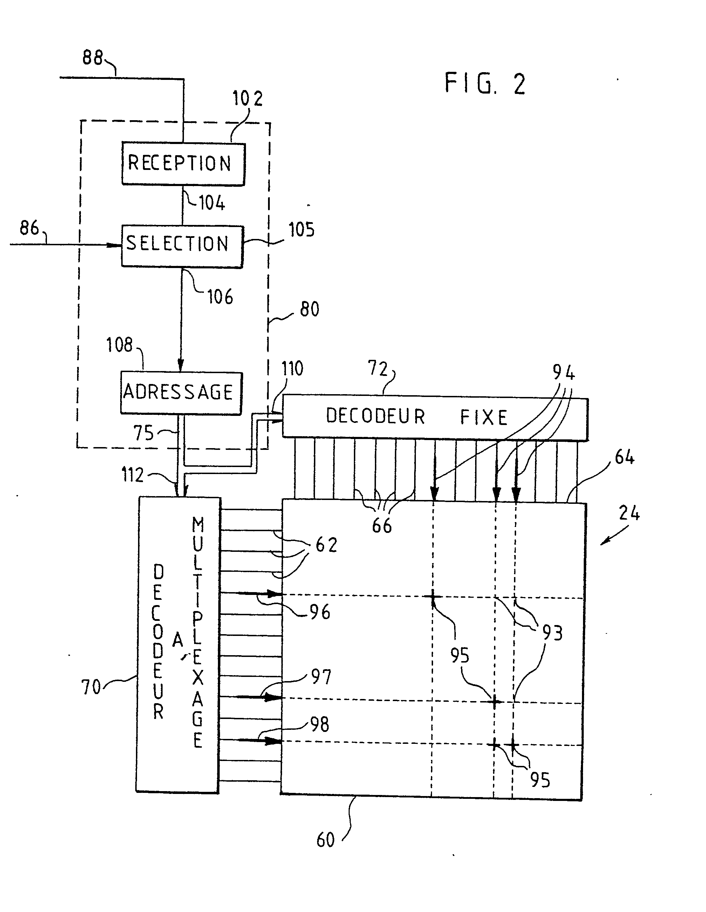

Les surfaces internes des lames 52 et 54 sont revêtues chacune d'un réseau de conducteurs parallèles ou électrodes réalisés selon les techniques classiques d'exécution des dispositifs d'affichage à cristaux liquides, par exemple par dépôt de fines pellicules d'indium qui n'affectent pratiquement pas la transparence de ces lames. Les électrodes de la lame 52 forment un réseau de lignes horizontales reliées au bord de l'un des côtés verticaux 60 de la plaque 24 à une série de lames de contact parallèles respectives 62 (figure 2). Ces contacts sont eux-mêmes raccordés à une pluralité de sorties d'un dispositif de décodage à multiplexage 70. Les électrodes tapissant la face interne de la lame 54 sont disposées en une pluralité de colonnes reliées au voisinage de l'extrémité supérieure 64 de la plaque 24 à une série de lames de contact 66, elles-mêmes raccordées à la sortie d'un décodeur 72.

Les électrodes raccordées aux lames de contact 62 et 66 permettent de constituer une matrice d'affichage (figure 2) dans laquelle chaque point situé à un croisement entre une électrode ligne et une électrode colonne excitées par une tension appropriée peut être détectée visuellement.

Dans cet exemple, la plaque d'affichage 24 a une dimension d'environ 10x10 cm et comporte 124 lignes et 124 colonnes.

Les dispositifs de décodage 70 et 72 (figure 2) sont montés à l'intérieur du cadre 50 (figure 1). Ils sont alimentés via une liaison 75 par un dispositif de commande et d'alimentation 80. Ce dispositif contient d'une part tout le dispositif électronique nécessaire à l'alimentation convenable des électrodes d'affichage de la plaque 24. Il comprend également les moyens opératoires en réponse à des signaux électriques de commande qui lui sont appliqués par une liaison 88 pour adresser les points de la matrice d'affichage dont l'excitation doit permettre la visualisation de marques à des emplacements de la surface de cette plaque correspondant à ces commandes.

Ce circuit de commande 80 (figure 2) comprend notamment un récepteur 102 de signaux transmis par la liaison 88. La sortie 104 de ce récepteur 102 peut, suivant la nature des signaux, être reliée à un dispositif d'adressage 108 directement ou par l'intermédiaire d'un dispositif de sélection 105 possédant une entrée recevant une liaison de commande 86. Les signaux issus du circuit de sélection 104 sont alors transmis, au dispositif d'adressage 108 dont la ligne de sortie 75 se subdivise en une liaison d'adressage 119 du décodeur 72 et une liaison d'adressage 112 du décodeur multiplexeur 70.

L'écran 14 est accolé à la lame polarisante 55 revêtant la plaque à cristaux liquides 24 du côté de l'observateur 20. Cet écran est avantageusement constitué par une pellicule souple d'un matériau translucide qui vient s'appliquer étroitement contre la surface de la plaque 24 lorsque l'on chasse les bulles d'air interposées entre ces deux surfaces. Cette pellicule souple constituée par exemple en un matériau connu sous la marque "Paratralux" possède des propriétés diffusantes appropriées pour faire apparaître des images de très bonne qualité des enregistrements portés par le film 44 après traversée de la plaque 24.

La pellicule d'écran 14 possède une face relativement brillante collée contre la plaque 24, sa face opposée étant mate, ce qui permet d'éliminer avec une excellente efficacité les reflets parasites dûs à l'éclairage ambiant. L'observateur obtient ainsi une vision très nette de l'image présentée à l'écran même sous des angles relativement grands par rapport à la normale.

Les bobines 40 et 42 de support du film 44 sont mécaniquement couplées à un bouton de commande 82 dont la position est repérée à l'aide d'une échelle graduée 84. Ce bouton 82 permet de sélectionner à volonté l'image présentée devant la source lumineuse 32 pour être projetée sur l'écran 14. Le bouton 82 est également relié par un dispositif d'encodage non représenté et la ligne de commande 86 au circuit de sélection 104 du circuit de commande et d'alimentation 80.

L'ensemble des projecteurs 10 et de la plaque d'affichage 24 est enfermé dans un boîtier schématiquement représenté par un trait interrompu 90 qui forme une unité compacte et dont la face antérieure est formée par l'écran 14.

En fonctionnement, on sélectionne, grâce au bouton 82, une image sur le film 44 comportant une représentation graphique par rapport à laquelle on cherche à afficher des indications reçues par la ligne 88. Une sélection de ces indications peut être effectuée en fonction du signal sur la ligne de commande 66 en correspondance de l'image sélectionnée par le bouton 80. L'alimentation de la lampe 32 du projecteur 30 permet de former cette image sur l'écran 14. Le dispositif d'affichage à cristaux liquides fonctionne par transparence en modulant la lumière issue de l'objectif 36.

Lorsque l'un des noeuds de la matrice de commande est excité, une marque 92 (figure 1) apparaît dans la lame liquide 56 dont l'ombre se trouve portée sur l'écran 14. Cette ombre est distinctement visible pour l'observateur 20 en superposition à un emplacement de la figure projetée sur l'écran 14 dont la position est déterminée par le signal de commande des électrodes ligne et colonne de la matrice à cristaux liquides 24.

En se référant à la figure 2, on remarque qu'il est possible de faire apparaître simultanément une multiplicité de marques telles que 92 sur la figure projetée sur l'écran 14 à l'aide de la plaque de cristaux liquides 24 en utilisant un décodeur à multiplexage tel que 70 pour l'excitation des lignes horizontales tandis qu'un décodeur fixe 72 est utilisé pour les électrodes colonnes. On a représenté par des flèches 94 trois colonnes excitées en réponse aux signaux de la ligne 88 pour un affichage de quatre marques représentées par quatre croix 95 sur la face de la matrice 24. Afin d'exciter les seules positions repérées par la référence 95 sans provoquer d'excitation aux autres points de croisement, repérés par 93, des lignes et colonnes qui se croisent en 95, on excite les électrodes lignes repérées par les flèches 96, 97 et 98 successivement dans cet ordre par une opération de balayage. Ce mode de commande est classique dans les matrices de cristaux liquides.

La marque 92 peut apparaître, selon l'orientation des polariseurs 53 et 55 comme une zone plus claire sur un fond relativement plus foncé sur lequel est projetée l'image issue du film 44. Au contraire, et de préférence, dans l'application présentement décrite, cette marque peut apparaître comme une tache plus foncée que le niveau d'éclairement moyen du fond de cette image.

On a constaté que le procédé de modulation de la lumière éclairant l'image par absorption sélective des rayons lumineux tombant sur l'écran 14 à l'aide d'une plaque d'affichage électrique telle que 24, permettait de superposer à cette image des marques possédant une excellente définition. En outre, dans tous les cas, grâce à la disposition de la plaque 24 entre l'écran 14 et le projecteur 30, l'ombre 24 sur l'écran 14 peut être observée par l'observateur 20 sans difficulté, même dans une direction relativement écartée de la normale 0054492
à l'écran.

On sait que les cristaux liquides nécessitent souvent, pour que la vision des indications qu'ils produisent soit de bonne qualité, que leur observation se fasse d'assez près de la normale à la surface de la plaque. L'angle de vision de ces cristaux est en effet en général assez faible et le défaut s'accentue lorsque les points de la matrice, au lieu d'être excités d'une façon continue,le sont par intermittence en réponse à la commande de multiplexage des électrodes de ligne par le décodeur à balayage 70. Cette excitation par intermittence des points de la matrice ne permet pas, en général, d'atteindre le meilleur contraste entre les zones excitées et les zones non excitées. Grâce à la disposition de l'écran en avant de la plaquette de cristaux liquides et au fait que c'est l'ombre portée de la zone de la plaque de cristaux liquides excitée que l'oeil observe, on s'afranchit de la servitude d'un angle de vision relativement faible.

On a décrit ici une plaque d'affichage à cristaux liquides à structure de matrice qui permet d'exciter sélectivement un très grand nombre de points à la surface de cette plaque, et par conséquent face à l'image projetée sur l'écran 14. Il est possible, comme représenté par exemple sur la figure 2, de faire varier dans des proportions considérables la position des points excités en réponse aux signaux de commande sur la liaison 88 dans cette image et d'exciter un nombre de points relativement élevé. En outre, il est possible, en utilisant des matrices de points relativement serrés disponibles actuellement, de modifier l'aspect des marques affichées en composant des signes de formes différentes correspondant à des significations différentes, en différents points de l'image projetée par affichage d'assemblages particuliers de marques ponctuelles. Ces marques peuvent être des signes figuratifs ou des caractères alphanumériques formés, par exemple, à l'aide des matrices de caractères de 5 x 7 points.

Il est également possible et, dans certaines applications, très avantageux de faire apparaître les marques par intermittence de façon à donner l'impression d'un clignotement propre à attirer l'attention. D'autres variations de l'aspect des marques affichées sont bien entendu possibles.

Bien entendu, l'invention peut être mise en oeuvre avec des dispositifs de visualisation à cristaux liquides réalisés selon d'autres modes que la forme matricielle pour commande de position des indications affichées par rapport à l'image projetée sur l'écran 14. De même, cet écran peut être réalisé sous d'autres formes que celle indiquée à titre d'exemple. La disposition relative des différents constituants du dispositif de visualisation peut être modifiée.

A cet égard, on a représenté sur la figure 3 un boîtier 130 parallélépipédique dont la face antérieure est fermée par un écran translucide 114, rectangulaire, devant lequel peut défiler un film 144 sur lequel sont enregistrées des vues transparentes (diapositives) à visualiser sur l'écran 114 en grandeur nature.

Le film est monté sur des bobines 140, 142, qui peuvent être commandées par des moyens appropriés non représentés, pour sélectionner la figure à présenter à l'écran.

Accolée à la face interne de l'écran diffusant 114 est une plaque à cristaux liquides 124 dont la réalisation et la commande peuvent être identiques à celles de la lame 24 des figures 1 et 2.

Le film 144 est guidé à proximité immédiate de la face interne de la plaque 124.

Une lampe 132 est logée au fond du boîtier 130 pour provoquer l'apparition de la figure enregistrée sur le film 144 sur l'écran 114, à travers la plaque à cristaux liquides 124. Les marques d'affichage de celle-ci se superposent alors à la figure pour l'observateur 120 de l'écran diffusant 114.

Le dispositif de la figure 3 permet de réaliser la visualisation conformément à l'invention dans un encombrement réduit et avec un boîtier 130 de faible profondeur. Il ne nécessite pas d'optique de projection. Il est possible également, selon une variante, de faire défiler le film 144 entre la lame 124 et l'écran 114. Il est également possible d'utiliser des supports d'image à structure diffusante s'apparentant à des papiers calques ou des feuilles de polyéthylène translucide pour porter les vues sur lesquelles on veut faire apparaître les marques produites par l'afficheur à cristaux liquides. La présence d'un écran diffusant supplémentaire tel que 114 n'est alors pas indispensable.

Revendications de Brevet :      0054492

1. Dispositif de visualisation sur une image d'une information transmise sous forme de signaux, caractérisé en ce qu'il comprend des moyens de présentation d'une figure à partir d'un enregistrement sur un support graphique et une plaque d'affichage électrique par modulation de lumière, telle qu'une plaque d'affichage à cristaux liquides, propre à faire apparaître au moins une marque dont la position à la surface de cette plaque est fonction de signaux électriques de commande qui lui sont appliqués, cette plaque étant juxtaposée à ces moyens de présentation de façon à ce que cette marque apparaisse en superposition à ladite figure pour un observateur.

2. Dispositif selon la revendication 1, caractérisé en ce que les moyens de présentation comprennent une source lumineuse et la plaque est placée entre cette source et la figure présentée.

3. Dispositif selon la revendication 1 ou 2, caractérisé en ce que les moyens de présentation de la figure comprennent un écran diffuseur.

4. Dispositif selon la revendication 3, caractérisé en ce que ladite plaque d'affichage est disposée entre l'écran et ledit support d'enregistrement.

5. Dispositif selon la revendication 3 ou 4, caractérisé en ce que les moyens de présentation de ladite figure comprennent un moyen de projection sur l'écran de l'enregistrement porté par le support.

6. Dispositif selon l'une des revendications 3 à 5, caractérisé en ce que la face de l'écran destinée à l'observation de l'image est la face opposée au support.

7. Dispositif selon l'une des revendications 3 à 6, caractérisé en ce que la plaque d'affichage est accolée à l'écran.

8. Dispositif selon la revendication 7, caractérisé en ce que l'écran est constitué par une pellicule translucide souple collée sur une face de la plaque d'affichage électrique.

9. Dispositif selon l'une des revendications 1 à 8, caractérisé en ce que la plaque d'affichage à cristaux liquides est une matrice.

10. Dispositif selon l'une des revendications précédentes,

0054492

caractérisé en ce que la plaque d'affichage électrique produit une marque foncée par rapport à un fond d'image clair.

11. Dispositif selon l'une des revendications précédentes, caractérisé en ce qu'il comprend des moyens de commande de la plaque d'affichage propres à faire apparaître des marques d'aspects différents en réponse à des signaux de commande.

12. Dispositif selon la revendication 11, caractérisé en ce que ces moyens de commande de la plaque d'affichage sont propres à faire apparaître des indications du type alphanumérique.

13. Dispositif selon la revendication 11 ou 12, caractérisé en ce que ces moyens de commande sont propres à faire apparaître la marque par intermittence.

14. Dispositif selon l'une des revendications précédentes, caractérisé en ce qu'il comprend un magasin propre à abriter une collection de supports d'enregistrement d'images différentes.

15. Dispositif selon la revendication 14, caractérisé en ce qu'il comprend des moyens pour sélectionner un support d'image à présenter parmi les supports contenus dans ce magasin.

16. Dispositif selon la revendication 14 ou 15, caractérisé en ce qu'il comprend des moyens propres à traiter les signaux de commande d'affichage en fonction de la figure dont la présentation est sélectionnée.

17. Dispositif d'affichage, caractérisé en ce qu'il comprend une plaque d'affichage à cristaux liquides, un écran diffusant, et des moyens pour projeter une image d'une marque apparaissant dans le dispositif d'affichage à cristaux liquides sur ledit écran diffusant.

18. Dispositif selon la revendication 17, caractérisé en ce que la plaque d'affichage à cristaux liquides est placée du côté dudit écran opposé à sa face d'observation.

19. Dispositif selon la revendication 18, caractérisé en ce que la plaque d'affichage est sensiblement parallèle à l'écran et lesdits moyens de projection sont propres à projeter l'ombre portée de ladite marque sur ledit écran.

20. Dispositif selon l'une des revendications 18 ou 19, caractérisé en ce que la face de l'écran destinée à l'observation

présente un aspect mat pour supprimer les reflets de la lumière du côté d'observation.

0054492

1 / 2

88

84  82

86

COMMANDE
ET
ALIMENTATION

80

75

70

FIG.1

90

30  40

32

44

36

14

15

12

92  94

53  55

52  56

54

50

24

90

140

FIG. 3

120

130

124

144

114

130

142

FIG. 2

Office européen
des brevets

**RAPPORT DE RECHERCHE EUROPEENNE**

**0054492**

Numéro de la demande

EP 81 40 1991

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | <u>GB - A - 1 447 111</u> (MARCONI) <br><br> * page 1, ligne 11 - page 2, ligne 30; figure 1 * <br><br> -- | 1-3,5, 9-11, 14,15 | G 02 F 1/13 <br> 9/30 |
| X | <u>FR - A - 2 164 225</u> (BROWN BOVERI) <br><br> * page 1; page 2, ligne 36 - page 4, ligne 13; page 6, ligne 12 - page 7, ligne 10; page 8, lignes 22-26; page 9, lignes 8-33; figures 1-4 * <br><br> -- | 1,3,4, 9-11, 13-15, 17-19 | |
| X | IEEE CONFERENCE RECORD OF 1970 IEEE CONFERENCE ON DISPLAY DEVICES/PAPERS presented at the United Engineering Center 2-3 décembre 1970 NEW YORK (US) L.T. CREAGH et al.:"Performance characteristics of nematic liquid crystal display devices" pages 35-41 <br><br> * page 35, colonne de droite, trois dernières lignes * <br><br> -- | 1 | **DOMAINES TECHNIQUES RECHERCHES (Int. Cl. 3)** <br><br> G 02 F 1/13 |
| X | JOURNAL OF PHYSICS E; SCIENTIFIC INSTRUMENTS, vol. 6, no. 5, mai 1973 LONDRES (GB) Ch. GOOCH et al.:"The use of liquid crystals to make program-mable graticules in optical systems" pages 485-487 <br><br> * page 485; figures 1-3 * <br><br> -- <br> °/° | 1,9-11 | |

Le présent rapport de recherche a été établi pour toutes les revendications

| Lieu de la recherche | Date d'achevement de la recherche | Examinateur |
|---|---|---|
| La Haye | 12-03-1982 | BORMS |

OEB Form 1503.1   06.78

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| A | <u>US - A - 3 581 002</u> (W.J. DODDS)<br><br> * revendications 1-4 *<br><br> ------- | 1,9-11 |

## DOCUMENTS CONSIDERES COMME PERTINENTS

**CLASSEMENT DE LA DEMANDE (Int. Cl. ³)**

**DOMAINES TECHNIQUES RECHERCHES (Int. Cl. ³)**